# FASCICULE DE BREVET EUROPEEN

(11) **EP 1 897 654 B1**
(45) Date de publication et mention de la délivrance du brevet: **04.03.2009**
(21) Numéro de dépôt: 07301206.4
(22) Date de dépôt: 04.07.2007
(51) Int. Cl.: B23P 19/10, B62D 65/06, B60J 1/00

(54) **Procédé de centrage d'une vitre de véhicule automobile sur une table à centrer d'une ligne de production**
Zentrierverfahren für eine Fahrzeugfensterscheibe auf einem Zentriertisch in einer Produktionslinie
Method of centering an automobile window on a centering table of a production line

(30) Priorité: 08.09.2006 FR 0653646
(43) Date de publication de la demande: 12.03.2008
(73) Titulaire: Peugeot Citroën Automobiles SA, 78943 Vélizy-Villacoublay Cedex (FR)
(72) Inventeur: Carniero, Laurent, 93120 La Courneuve (FR)

(56) Documents cités:
- EP-A1- 1 123 858
- FR-A1- 2 831 129
- JP-A- 1 303 226
- JP-A- 8 337 310
- JP-A- 11 043 086
- JP-A- 2004 345 025

## Description

L'invention concerne un procédé de positionnement d'une vitre de véhicule automobile dans une table de centrage d'une ligne de production, ainsi qu'une table de centrage pour la mise en oeuvre de ce dispositif. Un tel procédé ainsi qu'une table de centrage sont décrits dans le document FR-A-2 831 129.

En ligne de production, le montage d'une vitre sur un véhicule est réalisé par un robot dit robot retourneur dont un bras pourvu d'un dispositif de préhension à ventouse vient saisir la vitre préalablement positionnée sur la table de centrage.

Le robot vient ensuite placer la vitre en vis-à-vis de l'ouverture du véhicule dans laquelle elle doit être montée, puis il l'engage dans cette ouverture pour l'y fixer au moyen d'un joint périphérique approprié.

La table de centrage est ensuite approvisionnée avec une nouvelle vitre qui est positionnée sur cette table pour que le robot procède à sa pose sur un autre véhicule.

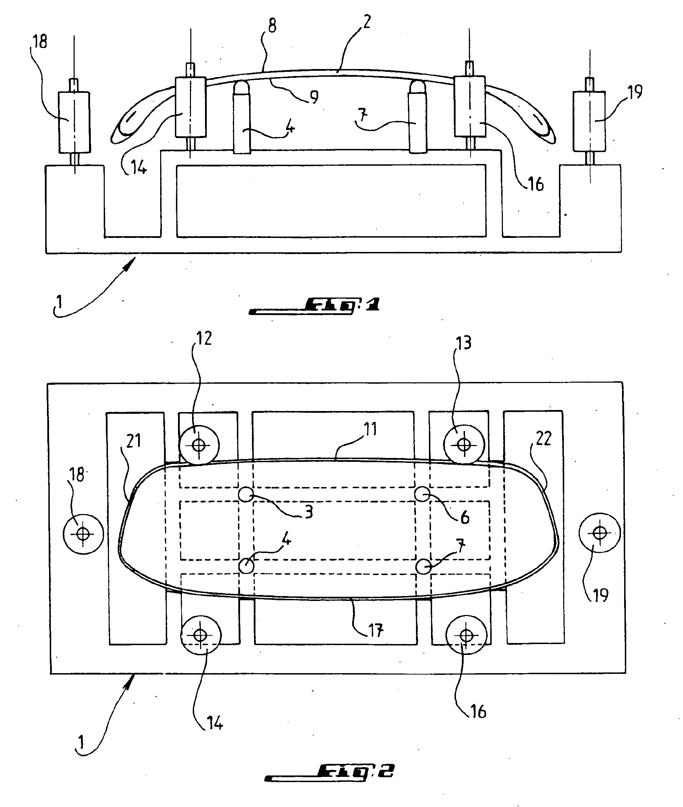

Une telle table de centrage est représentée en figure 1 et 2 en étant repérée par 1, une vitre 2 étant posée sur des plots 3, 4, 6, 7 de cette table. La face bombée ou externe 8 de cette vitre est orientée vers le haut, sa face intérieure creuse 9 étant orientée vers le bas.

Avant saisie de la vitre par le robot, la vitre est centrée au moyen d'actionneurs équipant la table. Le positionnement longitudinal de la vitre 2 consiste par exemple à plaquer un bord transversal supérieur 11 de cette vitre contre deux rouleaux ou butées 12 et 13 équipant la table et espacés transversalement l'un de l'autre.

Ce déplacement peut être provoqué en commandant deux rouleaux 14, 16, mobiles longitudinalement et opposés aux rouleaux fixes 12 et 13, ces rouleaux mobiles venant alors en appui contre un bord transversal inférieur 17 de la vitre 2 pour la déplacer en amenant son bord transversal supérieur en appui sur les rouleaux 12 et 13.

De manière analogue, le centrage transversal de la vitre peut être effectué en rapprochant deux rouleaux 18 et 19 mobiles transversalement et aptes à venir en appui contre deux bords longitudinaux 21 et 22 de la vitre 2.

La précision du centrage de la vitre dans la table correspond à la précision du positionnement de la vitre par rapport au bras du robot, et donc à la précision du positionnement de la vitre par rapport à l'ouverture du véhicule dans laquelle elle doit être montée.

Ainsi, en cas de mauvais centrage de la vitre dans la table, la vitre est présentée par le robot de manière décalée par rapport à l'ouverture dans laquelle elle doit être montée, de sorte que le montage ne peut pas être effectué.

Il s'avère que dans le cas de vitres présentant un contour très courbe, le fait de positionner le bord supérieur en appui sur des galets et le bord latéral contre un troisième galet reste insuffisant pour garantir un positionnement suffisamment précis de la vitre par rapport à la table.

Le but de l'invention est de proposer un procédé de positionnement simple d'une vitre sur une table de centrage, qui soit adapté à des vitres ayant un contour fortement courbe.

A cet effet, l'invention a pour objet un procédé de positionnement d'une vitre sur une table de centrage, préalablement à la préhension de cette vitre par un robot de pose sur un véhicule, dans lequel on colle un pion en un point de référence de la vitre avant dépose de cette vitre sur des plots de la table, dans lequel on déplace la vitre longitudinalement pour placer l'un de ses bords transversaux en appui contre deux rouleaux fixes espacés transversalement l'un de l'autre, en commandant un actionneur équipant la table et pourvu d'un vé mobile longitudinalement, pour happer le pion avec le vé de manière à centrer la vitre longitudinalement en appui sur les rouleaux fixes et transversalement par engagement du pion en fond de vé.

L'invention concerne également un procédé tel que défini ci-dessus, dans lequel le pion est collé à la face de la vitre qui est posée sur les plots.

L'invention concerne également un procédé tel que défini ci-dessus, dans lequel le pion est collé en un point de référence situé sur un axe de symétrie de la vitre s'étendant perpendiculairement aux bords transversaux de cette vitre.

L'invention concerne également un procédé tel que défini ci-dessus, dans lequel le pion est collé à proximité du bord transversal de la vitre destiné à être mis en appui contre les rouleaux fixes de la table.

L'invention concerne également un procédé tel que défini ci-dessus, dans lequel on utilise un vé asservi en déplacement et monté sur un ressort de compression.

L'invention concerne également un procédé tel que défini ci-dessus, dans lequel après centrage de la vitre grâce au vé mobile, on commande un autre actionneur pour déplacer deux rouleaux de la table qui sont mobiles longitudinalement en étant espacés l'un de l'autre transversalement pour les placer en appui sur un autre bord transversal de la vitre.

L'invention concerne également un procédé tel que défini ci-dessus, dans lequel après centrage grâce au vé mobile, l'actionneur du vé mobile est commandé pour appliquer une pression sur le pion pendant le rapprochement des rouleaux mobiles de la table.

L'invention concerne également une table de centrage pour la mise du procédé défini ci-dessus, comprenant deux rouleaux fixes espacés transversalement l'un de l'autre et un actionneur incluant une partie mobile longitudinalement par rapport à la table, et un vé de centrage monté sur cette partie mobile.

L'invention concerne également une table de centrage pour la mise du procédé défini ci-dessus, dans laquelle le vé de centrage est lié à la partie mobile de l'actionneur par l'intermédiaire d'un ressort de compression.

L'invention sera maintenant décrite plus en détail, et en référence aux figures annexées.
La figure 1 montre schématiquement une vitre courbe posée horizontalement sur une table de centrage en vue de face ;
La figure 2 montre schématiquement une vitre posée sur une table de centrage dans une vue de dessus ;
La figure 3 montre schématiquement en vue de dessus une vitre posée horizontalement sur une table de centrage et en cours de centrage grâce au procédé selon l'invention ;
La figure 4 montre schématiquement en vue de dessus la vitre de la figure 3 en cours de centrage selon le procédé selon l'invention.

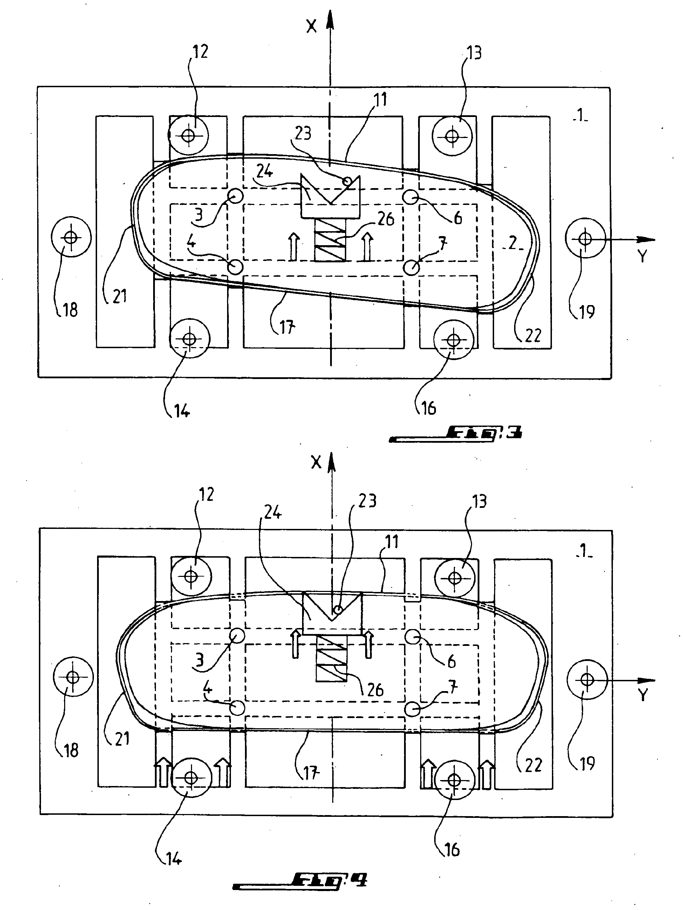

Les éléments communs à l'état de la technique présenté en figure 1 et 2, et à l'invention présentée dans les figures 3 et 4 portent les mêmes références numériques.

L'idée à la base de l'invention est de coller en un point de référence de la vitre un pion de centrage afin d'utiliser ce pion avec un actionneur venant le happer pour centrer la vitre transversalement et horizontalement en une opération unique.

Ce pion qui est représenté par un point repéré par 23 dans les figures 3 et 4 est collé à la face intérieure creuse 9 de la vitre 2 au niveau d'un axe de symétrie de celle-ci, dans une région proche de son bord transversal supérieur 11. Il peut par exemple être collé sur un repère de la vitre imprimé durant la fabrication de cette vitre.

L'axe de symétrie de la vitre est un axe sensiblement perpendiculaire au bord transversal supérieur 11 et au bord transversal inférieur 17 de cette vitre, pour que ce pion permette d'assurer un centrage transversal de la vitre, c'est-à-dire selon l'axe repéré par x sur les figures.

Lorsque la vitre 2 est posée sur la table à centrer 1, sa face inférieure est en appui sur le plots 3, 4, 6, 7, et son contour est situé à l'intérieur de la région délimitée par les rouleaux 12, 13, 14, 16, 18 et 19 qui ont une hauteur significativement plus importante que les plots 3, 4, 6 et 7.

Le pion 23 qui est collé à la face inférieure de la vitre est alors situé globalement entre les plots 3 et 6.

Le positionnement précis de la vitre 2 sur la table à centrer est obtenu un déplaçant un vé repéré par 24 qui est mobile longitudinalement, c'est-à-dire selon l'axe repéré par x dans un sens le rapprochant d'un axe transversal passant par les deux rouleaux 12 et 13.

Ce vé 24 est par exemple lié en mouvement à une partie mobile d'un actionneur non représenté, tout en étant relié à cette partie mobile par un ressort de compression 26 s'étendant longitudinalement.

Sur sa trajectoire, le vé 24 happe le pion 23, qui glisse d'abord le long d'un flanc du vé pour venir se placer au fond de ce vé afin de centrer la vitre 2 transversalement. En fin de mouvement du vé 24, le bord transversal supérieur 11 de la vitre est en appui contre les deux rouleaux fixes 12 et 13, de sorte que la vitre est également positionnée longitudinalement par rapport à la table 1.

Grâce au ressort de compression 26 le vé peut être déplacé par un simple actionneur asservi en position, de sorte que la fin du déplacement de l'actionneur correspond à une phase de compression de ce ressort pour que le bord 11 de la vitre exerce un effort sur les rouleaux contre lesquels elle est plaquée.

Après centrage de la vitre longitudinalement et transversalement grâce au vé, la pression exercée par le vé est maintenue. Les rouleaux 14 et 16 qui sont aussi mobiles longitudinalement peuvent alors être commandés pour être rapprochés de leurs rouleaux correspondants, à savoir respectivement les rouleaux 12 et 13.

Ceci permet de bloquer la vitre 2 en position dans la table 1 pour faciliter l'accostage des ventouses du robot retourneur et leur mise en dépression sans risquer de modifier la position de la vitre. Après fixation des ventouses du robot à la vitre, les rouleaux mobiles 14 et 16 sont déplacés en sens inverse pour débloquer la vitre et permettre au bras du robot retourneur de l'extraire de la table de centrage.

## Revendications

1. Procédé de positionnement d'une vitre (2) sur une table de centrage (1), préalablement à la préhension de cette vitre (2) par un robot de pose sur un véhicule, dans lequel on colle un pion (23) en un point de référence de la vitre (2) avant dépose de cette vitre (2) sur des plots (3, 4, 6, 7) de la table, dans lequel on déplace la vitre (2) longitudinalement (x) pour placer l'un de ses bords transversaux (11) en appui contre deux rouleaux fixes (12, 13) espacés transversalement (y) l'un de l'autre, en commandant un actionneur équipant la table (1) et pourvu d'un vé (24) mobile longitudinalement, pour happer le pion (23) avec le vé de manière à centrer la vitre (2) longitudinalement en appui sur les rouleaux fixes (13, 14) et transversalement par engagement du pion (23) en fond de vé (24).

2. Procédé selon la revendication 1, dans lequel le pion (23) est collé à la face (9) de la vitre qui est posée sur les plots (3, 4, 6, 7).

3. Procédé selon la revendication 1 ou 2, dans lequel le pion (23) est collé en un point de référence situé sur un axe de symétrie de la vitre (2) s'étendant perpendiculairement aux bords transversaux (11, 17) de cette vitre.

4. Procédé selon l'une des revendications 1 à 3, dans lequel le pion (23) est collé à proximité du bord transversal (11) de la vitre destiné à être mis en appui contre les rouleaux fixes (12, 13) de la table (1).

5. Procédé selon la revendication 1 ou 4, dans lequel on utilise un vé (24) asservi en déplacement et monté sur un ressort de compression (26).

6. Procédé selon l'une des revendications 1 à 5, dans lequel après centrage de la vitre (2) grâce au vé mobile (24), on commande un autre actionneur pour déplacer deux rouleaux (14, 16) de la table (1) qui sont mobiles longitudinalement en étant espacés l'un de l'autre transversalement pour les placer en appui sur un autre bord transversal (17) de la vitre (2).

7. Procédé selon la revendication 6, dans lequel après centrage grâce au vé mobile (24), l'actionneur du vé mobile est commandé pour appliquer une pression sur le pion (23) pendant le rapprochement des rouleaux mobiles (14, 16) de la table.

8. Table de centrage pour la mise en oeuvre du procédé selon l'une des revendications 1 à 7, comprenant deux rouleaux fixes (12, 13) espacés transversalement l'un de l'autre et un actionneur incluant une partie mobile longitudinalement par rapport à la table (1), et un vé (24) de centrage monté sur cette partie mobile.

9. Table de centrage selon la revendication 8, dans laquelle le vé de centrage (24) est lié à la partie mobile de l'actionneur par l'intermédiaire d'un ressort de compression (26).

## Claims

1. Method of positioning a window (2) on a centring table (1), prior to the grasping of this window (2) by a robot for fitting it to a vehicle, in which method a peg (23) is stuck to a reference point of the window (2) before depositing this window (2) on studs (3, 4, 6, 7) of the table, in which method the window (2) is moved longitudinally (x) to place one of its transverse edges (11) in bearing engagement against two fixed rollers (12, 13) transversely spaced (y) from each other, by commanding an actuator equipping the table (1) and provided with a vee (24) mobile longitudinally, to trap the peg (23) with the vee to centre the window (2) longitudinally in bearing engagement on the fixed rollers (13, 14) and transversely by engagement of the peg (23) in the bottom of the vee (24).

2. Method according to Claim 1, wherein the peg (23) is stuck to the face (9) of the window that is placed on the studs (3, 4, 6, 7).

3. Method according to Claim 1 or 2, wherein the peg (23) is stuck to a reference point situated on an axis of symmetry of the window (2) extending perpendicularly to the transverse edges (11, 17) of that window.

4. Method according to one of Claims 1 to 3, wherein the peg (23) is stuck in the vicinity of the transverse edge (11) of the window intended to be placed in bearing engagement against the fixed rollers (12, 13) of the table (1).

5. Method according to Claim 1 or 4, wherein a controlled movement vee (24) mounted on a compression spring (26) is used.

6. Method according to one of Claims 1 to 5, wherein after centring of the window (2) by means of the mobile vee (24), another actuator is commanded to move two rollers (14, 16) of the table (1) that are mobile longitudinally and spaced from each other transversely to place them in bearing engagement on another transverse edge (17) of the window (2).

7. Method according to Claim 6, wherein after centring by means of the mobile vee (24), the actuator of the mobile vee is commanded to apply pressure to the peg (23) during the movement toward each other of the two mobile rollers (14, 16) of the table.

8. Centring table for implementing the method according to one of Claims 1 to 7, comprising two fixed rollers (12, 13) spaced transversely from each other and an actuator having a portion mobile longitudinally relative to the table (1), and a centring vee (24) mounted on this mobile portion.

9. Centring table according to Claim 8, wherein the centring vee (24) is connected to the mobile portion of the actuator via a compression spring (26).

## Patentansprüche

1. Verfahren zur Positionierung einer Fensterscheibe (2) auf einem Zentriertisch (1) vor dem Ergreifen dieser Fensterscheibe (2) durch einen Roboter zur Anordnung an einem Fahrzeug, wobei man vor Anordnung dieser Fensterscheibe (2) auf Nocken (3, 4, 6, 7) des Tisches einen Zapfen (23) auf einem Bezugspunkt der Fensterscheibe (2) klebt, wobei man die Fensterscheibe (2) in Längsrichtung (x) bewegt, um einen ihrer Längsränder (11) in Anlage an zwei feststehende, in Querrichtung (y) voneinander beabstandete Rollen (12, 13) zu platzieren, indem ein am Tisch (1) vorgesehenes Betätigungsglied betätigt wird, das mit einem in Längsrichtung beweglichen V-Element (24) versehen ist, um den Zapfen (23) mit dem V-Element zu erfassen und so die Fensterscheibe (2) in Längsrichtung in Anlage an die feststehenden Walzen (13, 14) und in Querrichtung durch Eingriff des Zapfens (23) in den Boden des V-Elements (24) zu zentrieren.

2. Verfahren nach Anspruch 1, wobei der Zapfen (23) an die auf den Nocken (3, 4, 6, 7) angeordnete Fläche (9) der Fensterscheibe (2) geklebt wird.

3. Verfahren nach Anspruch 1 oder 2, wobei der Zapfen (23) auf einem Bezugspunkt geklebt wird, der sich auf einer Symmetrieachse der Fensterscheibe (2) befindet, die sich senkrecht zu den Querrändern (11, 17) dieser Fensterscheibe (2) erstreckt.

4. Verfahren nach einem der Ansprüche 1 bis 3, wobei der Zapfen (23) in der Nähe des Querrands (11) der Fensterscheibe geklebt wird, der in Anlage an die feststehenden Rollen (12, 13) des Tisches (1) gebracht werden soll.

5. Verfahren nach Anspruch 1 oder 4, wobei man ein bewegungsgesteuertes und an einer Druckfeder (26) angebrachtes V-Element (24) verwendet.

6. Verfahren nach einem der Ansprüche 1 bis 5, wobei man nach der Zentrierung der Fensterscheibe (2) durch das bewegliche V-Element (24) ein anderes Betätigungsglied betätigt, um zwei Rollen (14, 16) des Tisches (1), die in Längsrichtung beweglich sind, wobei sie in Querrichtung voneinander beabstandet sind, zu bewegen, um sie in Anlage an einen anderen Querrand (17) der Fensterscheibe (2) zu bringen.

7. Verfahren nach Anspruch 6, wobei nach dem Zentrieren durch das V-Element (24) das Betätigungsglied des beweglichen V-Elements betätigt wird, um während des Annäherns der beweglichen Rollen (14,1 6) des Tisches einen Druck auf den Zapfen (23) auszuüben.

8. Zentriertisch zur Durchführung des Verfahrens nach einem der Ansprüche 1 bis 7, mit zwei feststehenden Rollen (12, 13), die in Querrichtung voneinander beabstandet sind, und einem Betätigungsglied, das einen in Längsrichtung bezüglich des Tisches (1) beweglichen Teil enthält, und einem V-Zentrierlement (24), das an diesem beweglichen Teil angebracht ist.

9. Zentriertisch nach Anspruch 8, wobei das V-Zentrierelement (24) durch eine Druckfeder (26) mit dem beweglichen Teil des Betätigungsglieds verbunden ist.
